# EUROPEAN PATENT APPLICATION

(11) **EP 2 629 454 A1**
(43) Date of publication of application: **21.08.2013**
(21) Application number: 12290055.8
(22) Date of filing: 14.02.2012
(51) Int. Cl.: H04L 12/24

(54) **Method of providing topology information of a communication network**

(71) Applicant: Alcatel Lucent, 75007 Paris (FR)
(72) Inventor: Scharf, Michael, 70435 Stuttgart (DE); Banniza, Thomas-Rolf, 71701 Schwieberdingen (DE)
(74) Representative: Zinsinger, Norbert

(57) **Abstract**

The present invention concerns a method of providing network information of a communication network (1). The method comprises the steps of gathering (2) network topology information of the communication network (1), abstracting (3) the network topology information, wherein the level-of-detail of the network topology information is reduced and exporting (4) the abstracted network topology information. Furthermore, the present invention concerns a network management component (5) a data processing component and a software product. The network management component (5) is adapted to gather (2) network topology information of the communication network (1), abstract (3) the network topology information, wherein the level-of-detail of the network topology information is reduced and export (4) the abstracted network topology information. The data processing component is adapted to receive network topology information of the communication network (1) from a network management function, abstract (3) the network topology information, wherein the level-of-detail of the network topology information is reduced and export (4) the abstracted network topology information. The software product is adapted to abstract (3) the network topology information of the communication network (1), wherein the level-of-detail of the network topology information is reduced, and export (4) the abstracted network topology information, when executed by a data processing unit.

## Description

### Technical Field

The present invention relates to communication networks and, more specifically to a method of providing network information by abstracting the network topology information of a communication network.

### Background

In communication networks a provider can offer a service to provide information about the network topology to customers of the network, in order to help to improve load balancing decisions or peer selection processes. To this purpose the network provider can offer one or more servers, in particular ALTO (= Application-Layer Traffic Optimization) servers, that have a certain view of the network and expose this to the outside world. By querying these servers with corresponding client software, a customer can obtain information about the network topology.

### Summary

The objective of the present invention is to provide network topology information in an improved way, particularly in larger networks.

The objective of the invention is achieved by a method of providing network information of a communication network comprising the steps of gathering network topology information of the communication network, abstracting the network topology information, wherein the level-of-detail of the network topology information is reduced, and exporting the abstracted network topology information.

The objective of the invention is further achieved by a network management component adapted to gather network topology information of a communication network, to abstract the network topology information, wherein the level-of-detail of the network topology information is reduced and to export the abstracted network topology information. The objective of the invention is further achieved by a data processing component adapted to receive network topology information of a communication network from a network management function, to abstract the network topology information, wherein the level-of-detail of the network topology information is reduced and to export the abstracted network topology information. Furthermore, the objective of the invention is achieved by a software product adapted to abstract the network topology information of a communication network, wherein the level-of-detail of the network topology information is reduced, and to export the abstracted network topology information, when executed by a data processing unit.

The present invention aims to overcome the restrictions and constraints of the prior art solutions, which provide the server of the network either with the full network topology information and/or require to configure the network server manually, by a method to provide the server with an abstracted network topology information in an automated processing. In a preferred embodiment, the abstracted network topology information is a simplified network topology information. Further advantages of the present invention are achieved by the embodiments of the invention indicated by the dependent claims.

In a preferred embodiment, a network management function gathers the network topology information. The network management function is provided in particular by a network management system (NMS), by one or more network monitor components or by communicating with network elements of the communication network directly, in particular by accessing routing tables. These alternatives may be used exclusively or in combination for gathering the network topology information.

In a preferred embodiment, the abstracted network topology information is exported to an ALTO server or to one or more topology exposure components, in particular to a web portal, and exposed by means of the ALTO server or the one or more other topology exposure components to a client of the ALTO server or to a client of the one or more other topology exposure components respectively. In this context the term "client" is used in a general way. Therefore the client could be a single person or software program, or many of them, typically being used on the customer side of the communication network.

In a preferred embodiment, the step of abstracting the network topology information comprises the steps of receiving a full topology network information comprising detailed information about original nodes/subnets of the communication network and applying a topology simplification on the full topology network information, wherein at least a subset of the original nodes/subnets of the communication network are aggregated to one or more new nodes/subnets giving a simplified abstracted topology of the communication network.

In a preferred embodiment, the step of aggregating at least a subset of the original nodes/subnets of the communication network to one or more new nodes/subnets of the communication network comprises the step of mapping, one or more times, the addresses of two or more of the original nodes/subnets to a Partition ID (=PID, ID = Identity) related to one of the one or more new nodes/subnets of the communication network, wherein a network map of the simplified network topology is provided. In a preferred embodiment, the original network map of the original communication network is thereby abstracted, wherein the number of the nodes/subnets of the simplified network topology is reduced in comparison to the number of the original nodes/subnets. In particular, the exemplary ALTO server operates on Internet Protocol (IP) addresses or subnets. In a preferred embodiment, one or more IP addresses are grouped into a so-called PID (= partition ID) that is defined by the network provider. In the context of ALTO, the mapping of addresses to PIDs is also called network map. The ALTO server exposes the network topology at the granularity of those PIDs. In the context of the invention the network topology related to the network addresses of the original network elements, in particular nodes/subnets, is referred to as the original network map, while the network topology related to the PID(s) comprising the aggregated network aggresses is referred to as the abstracted, simplified network map. Accordingly, the information referring to the cost values of the links between the original network elements, which are nodes/subnets in a preferred embodiment, is referred to as the original cost map, while the information referring to the cost values of the links of the simplified abstracted network map, is referred to as the abstracted simplified cost map. According to the foregoing definition, in a preferred embodiment, the step of abstracting the network topology information comprises the step of providing a cost map of the simplified topology of the communication network comprising cost values for the links between nodes in the simplified topology of the communication network.

In a preferred embodiment, the step of abstracting the network topology information comprises the steps of receiving the full network topology information from a network management function comprising the original detailed network topology information of the communication network and applying a graph transformation algorithm on the original detailed network topology information, wherein the simplified abstracted topology of the network is provided.

In a preferred embodiment, the step of applying the graph transformation algorithm comprises applying a rule to aggregate two or more nodes/subnets to a new single node/subnet, if the cost values between any of said two or more nodes/subnets fulfil a certain constraint, in a preferred embodiment, if they are below a given threshold. Potential input parameters for these costs are the number of hops, the configured routing costs, the delay, the available bandwidth, or OPEX costs (OPEX costs = operational expenditure costs). This threshold could be defined either as an absolute value or as a relative value. In a preferred embodiment,, the threshold could be set to a certain quantile of the maximum or average link costs in the topology (such as 10%). Links may be directed and then may have different costs in each direction. Then, both directions may have to be taken into account and the rule, which is also named similarity rule, may have to be fulfilled by both directions. The aggregated node represents the superset of addresses of the single node entities that are merged. In a preferred embodiment, if the aggregated entities represent IP subnet ranges, the aggregated entity represents the superset of the subnet(s) of the individual entities that are merged. The invention uses in that case the supernetting principle of IP address ranges if possible. In a preferred embodiment, , several IP prefix ranges are aggregated to one network prefix with shorter prefix length if this aggregated subnet refers to the same address range. As a result, the list of the IP prefixes represented by one node can be shortened.

In a preferred embodiment, the step of applying the graph transformation algorithm also comprises modifications of the links and link weights, which are in a preferred embodiment cost values or costs of the links, in the graph in order to deal with the aggregation of nodes. The objective of these modifications is to keep the difference between the original and abstracted topology as small as possible, in particular to minimize the error when the abstracted topology is used for decisions. Therefore, this step potentially includes the addition or removal of links as well as the modification of cost values.

In a preferred embodiment, the step of applying the graph transformation algorithm further comprises applying a rule to replace two or more parallel links starting/ending at same nodes/subnets and ending/starting in the new single node/subnet by a single new link with a new cost value.

In a preferred embodiment, the algorithm calculates the new cost value based on cost information of the two or more parallel links, in particular cost information based on routing protocol metrics, delay or bandwidth.

In a preferred embodiment, the step of applying the rule to replace two or more parallel links starting/ending at same nodes/subnets and ending/starting in the new single node/subnet comprises the step of replacing the two or more parallel links by a single link with a cost value equal to the minimum cost value of the parallel links, wherein the cost values of other links starting/ending in the new single node/subnet remain the same.

In a preferred embodiment, the step of applying the rule to replace two or more links, in particular parallel links, starting/ending at same nodes/subnets and ending/starting in the new single node/subnet comprises the step of replacing the two or more links by a single link with a cost value equal to the minimum, maximum or alternatively average cost value of the said two or more links, wherein the cost values of other links starting/ending in the new single node/subnet remain the same.

In a preferred embodiment, the step of applying the graph transformation algorithm comprises the step of applying the rules iteratively. In particular links are aggregated until the topology cannot be further simplified. In addition, the whole graph transformation might be repeated with different constraints for node aggregation to achieve different levels of details. Most notably, the threshold may be set to a new value in each iteration, and in particular in case the threshold refers to a cost value, it may be set to a higher value in each iteration until a certain level of abstraction is achieved.

In a preferred embodiment, the step of applying the graph transformation algorithms comprises the step of applying the rules iteratively to all nodes/subnets of the network based on a specific threshold until all nodes/subnets fulfilling the rule are aggregated.

In a preferred embodiment, the step of applying the graph transformation algorithms comprises the step of applying the rules iteratively based on a modified threshold, wherein all nodes/subnets fulfilling the constraint based on the modified threshold are aggregated, wherein the threshold is set to a new, in particular higher, value in the follow-up iterations, in particular in order to achieve an abstraction with a certain level-of-detail.

In a preferred embodiment, the level-of-detail of the simplified abstracted topology is determined by comparing graph properties of the abstracted simplified topology and of the original topology, in particular in order to determine whether the simplified abstracted topology corresponds to a given target level-of-detail. An example for a graph property to be considered is the number of nodes/subnets in the abstracted simplified topology and in the original topology. A corresponding level-of-detail objective could be to have no more than a certain number of nodes in the abstracted simplified topology.

In a preferred embodiment, the deviation of the simplified abstracted topology from the original topology is evaluated by calculating an error metric based on the graph properties. In a preferred embodiment, this error metric is the difference of the average cost between all nodes/subnets between the simplified abstracted topology and the original topology. The error metric can be used as input parameter for the graph transformation algorithm and specifically the constraint for the aggregation of nodes/subnets such as the threshold. In particular in case the threshold refers to a cost value, the threshold may be increased if the error metric is below a pre-configured target value, and the threshold may be decreased if the error metric is above a pre-configured target value, and the step of applying the graph transformation algorithm is subsequently repeated.

In a preferred embodiment, the constraint for aggregation of nodes/subnets and the formula to update the costs of links may be redefined in a different manner appropriate for the given type of cost metric, in particular if the cost metric is not related to routing cost. For example, if link weights refer to bandwidth, it would make sense to aggregate nodes/subnets that are very well connected. This implies that nodes/subnets should be aggregated if they are interconnected by links with a link weight above a threshold. In a preferred embodiment nodes/subnets or in the iterative case a group of nodes/subnets are aggregated if the cost value is larger than the threshold. Also, in that case the fore-going abstraction process could start with a large value in the first repetition and then subsequently reduce the threshold to reduce the level of detail in the abstracted graph.

### Brief Description of the Figures

The features and advantages of the present invention can be readily understood by considering the following detailed description in conjunction with the accompanying drawings, in which:
- Fig. 1: depicts an overall view of an exemplary communication network and of the method of providing network topology information
- Fig. 2: depicts an overall view of the method of providing network topology information
- Fig. 3: depicts a more detailed diagram of the method of providing network topology information
- Figs. 4a, 4b, 4c: depict a more detailed view of the steps of the method of processing abstracted network topology information

### Description of Embodiments

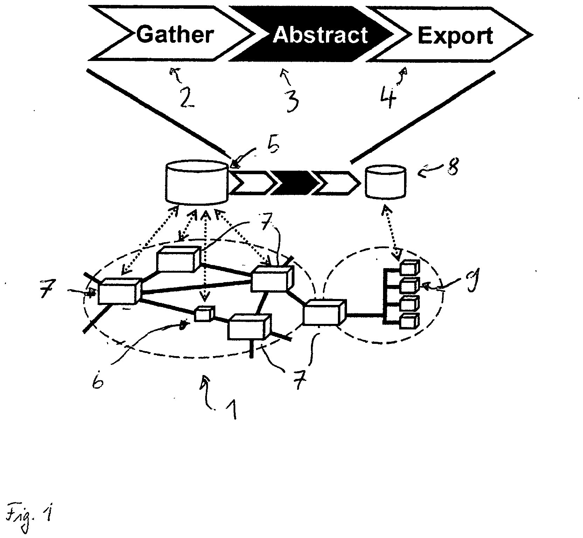

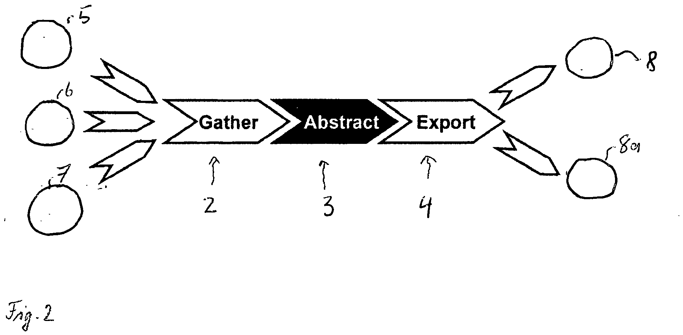

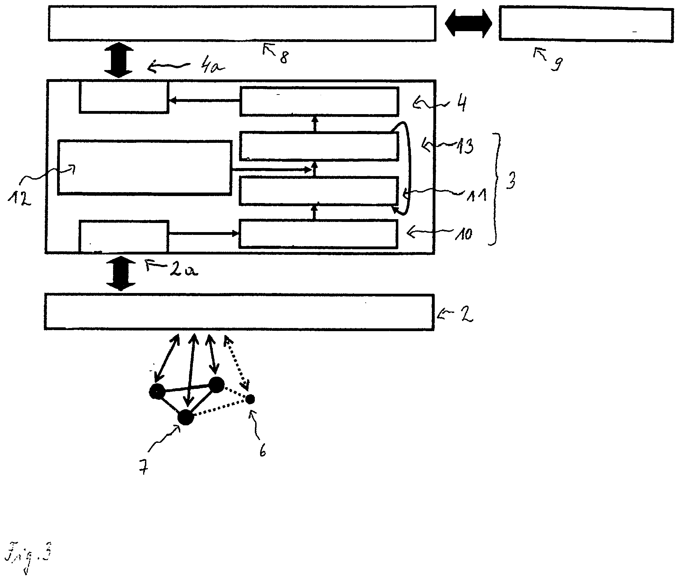

Fig. 1 depicts an overall view of an exemplary communication network and of the method of providing network topology information. The communication network 1 as shown in fig. 1 is for exemplary reasons an MPLS/IP WAN (= Multi Protocol Label Switching/Internet Protocol Wide Area Network) comprising network elements as the depicted network nodes 7. The MPLS/IP WAN is for exemplary reasons connected with a data center server 9 via an edge node combining the MPLS/WAN with e.g. a cloud data center or a content delivery network as depicted for exemplary reasons on the client side. Fig. 1 furthermore depicts an overall view of the method of providing network topology information from the provider of the network to a customer of the network. In fig. 1 the method of providing the network topology information is illustrated comprising the steps of gathering 2, abstracting 3 and exporting 4 the network topology information which is termed as information flow from the network provider side to the customer side of the communication network. The server which exposes the network topology information to clients is for illustrative reasons an ALTO server 8. These clients can be located inside the communication network itself, or, as shown in fig. 1, be located within the customers' premises. The network topology information that is required as input for the ALTO server 8 itself is provided by a network management function which gathers the detailed topology information about the communication network 1. The network management function as depicted in fig. 1 is provided by a network management system 5 which retrieves the detailed network topology information from the network nodes 7. Alternatively or in addition the network management function, gathering the detailed network topology information may be provided by a monitor device 6 which is also depicted in fig.1 for illustrative reasons. Alternatively, the detailed network topology information may be gathered from the network elements, e.g. network nodes 7, directly, e.g. by accessing the routing table(s) of the network nodes 7. On the customer side 9 - e.g. the depicted user with an ALTO client for instance in a cloud data center or in content delivery network - the processed abstracted network topology information which gives a simplified view of the network topology, is exposed to the one or more clients of the network, by a server, which is in particular the afore-mentioned ALTO server 8 as shown in fig. 1. Alternatively, the processed abstracted network topology information may be exposed to the one or more clients by another topology exposure component, such as a web portal. The components from and to which the information flow is directed is also, in a summarized way, depicted in fig. 2. Fig. 2 shows the alternative network information gathering components 5, 6 and 7 on the left side and the network information exposing components 8 and 8a on the right side,whereby the word "or" in fig. 2 should be understood as "inclusive alternative" (at least one from the list) and not as an "exclusion". Moreover, fig. 2 shows once again an overview of the network information abstraction processing steps 2, 3 and 4 named as topology simplification function as already depicted in fig. 1. Fig. 3 depicts a more detailed diagram of the network topology information abstraction and processing between the communication network elements as the depicted network entities, e.g. routers 7. Moreover, fig. 3 shows the optional monitoring device 6 as depicted for illustrative reasons as alternative for gathering the network topology information as stated above. The network management function gathering the network topology information termed as information gathering function 2 in fig. 3, gathers the detailed network topology information by data retrieval, in fig. 3 for illustrative reasons by simple network management protocol (SNMP), from the network entities, e.g. routers 7, or optionally from the monitoring device 6.

As depicted in fig. 3 the step of abstracting 3 the network topology information can be described as input data 10 provided by the information gathering function 2 via the interface 2a to the abstraction process, the input data 10 giving the full detailed network topology information 11, and processing the topology simplification 12 on the full network topology information 11, wherein the level-of-detail of the network topology information is reduced so that an abstracted topology 13 is achieved. This means that the network topology is simplified. In particular, the information about the network map showing the network topology comprising the nodes and subnets of the network is less detailed as will be described in more detail below. Therefore, the network map which is processed by the topology simplification 12 giving the abstracted simplified topology 13 is simplified in comparison to a network map which would depict the detailed original network topology. The simplified network map termed in this context as export map 4 is depicted in fig. 3 as output from the network topology information abstraction process. The depicted export map 4 is by the interface 4a exported to the ALTO server 8 and exposed to the ALTO client 9 as depicted in fig. 3 for exemplary reasons.

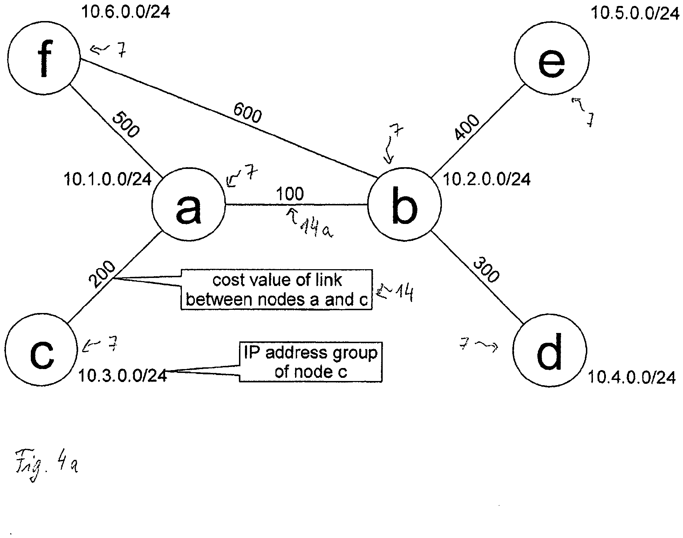

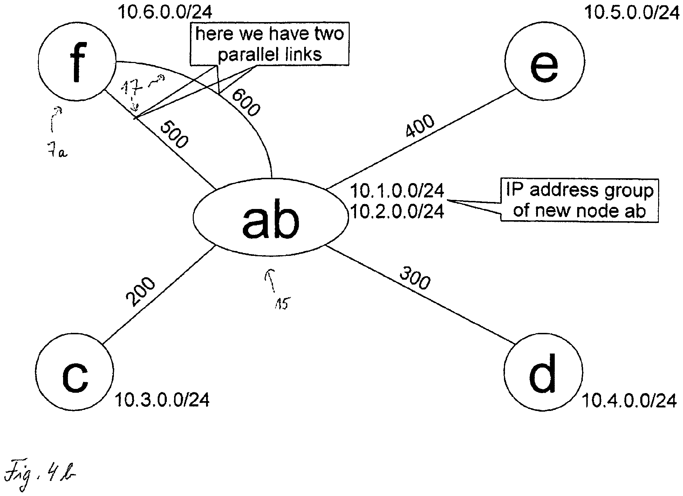

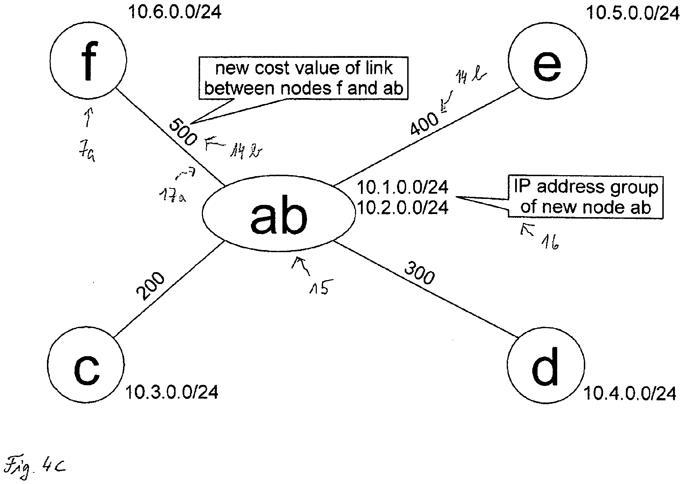

In the following the network topology abstraction process will be described in more detail with reference to figs. 4a, 4b and 4c which serve as illustrative example for the implementation of a graph transformation algorithm comprising a rule to aggregate two or more nodes/subnets 7 to a new single node/subnet 15 (fig. 4a, 4b) and a rule to replace two or more parallel links 17 starting/ending at same nodes/subnets 7a and ending/starting in the new single node/subnet 15 by a single new link 17a (fig. 4b, 4c).

In figures 4a, 4b, 4c IP version 4 addresses are depicted as examples. The same principle could be applied to other address types, including IP version 6 addresses, Ethernet addresses, etc.

Fig. 4a depicts network elements as nodes/subnets 7 (a, b, c, d, e and f) corresponding to the original detailed network topology of the communication network 1. For illustrative reasons, only six network nodes/subnets are depicted while in a real scenario a communication network comprises much more, e.g. hundreds, thousands or millions of network nodes/subnets. As already stated, each depicted network element represents a node or a subnet of the original network topology. In the given example, the network element "a" refers to an Internet Protocol (IP) subnet 10.1.0.0 with network prefix length 24. It may be a subnet which is as such composed by a plurality of nodes which are already grouped together. Another alternative, which is not shown in fig. 4a, is that a node or a network element refers to a single address only. In each case the network topology information referring to fig. 4a is termed as original detailed network topology information which presents the input for the abstraction process as described in the following. Furthermore, the links between the nodes/subnets 7 are indicated with a cost value of the respective link. For illustrative reasons, the nodes in the graph a and c refer to subnets and, as example, the cost value 14 of the link between nodes a and c is indicated with the cost value 200. Similarly, the cost value between node/subnets a and b is indicated 14a, bearing the cost value 100. By comparing the figs. 4a and 4b, it will be appreciated that the two nodes a and b have been aggregated providing the new single node/subnet ab comprising the IP address groups of node a and node b as IP address group of new node ab 16 as depicted in fig. 4b. The aggregating of the nodes/subnets a and b forming the new single node/subnet ab is the result of applying the rule to aggregate two or more nodes/subnets to a new single node/subnet, if the cost values between any of said two or more nodes/subnets are below a given threshold. For exemplary reasons, the threshold is set to 150, this means in this exemplary embodiment. applying the rule is to aggregate two or more nodes/subnets to a new single node/subnet, if the cost value(s) between any of said two or more nodes/subnets are below the cost value 150. The cost value between the nodes/subnets a and b is given by 100, and therefore below the threshold 150. By applying the aforementioned rule, the nodes/subnets a and b are aggregated to the new single node/subnet ab. By aggregating the nodes/subnets a and b to the new single node/subnet ab, the nodes/subnets a and b are removed from the network map and instead the new node/subnet ab is part of the network map, which is the abstracted simplified network map. The aforementioned rule to aggregate two or more nodes/subnets to a new single node/subnet may be termed as "similarity rule" as the aggregated nodes/subnets are aggregated using the criteria for similarity of costs, in a preferred embodiment, a cost value below a given threshold. The reason is that for a client looking at the network topology from outside, the link between the nodes/subnets a and b has a small cost value compared with the cost values of other links of the network, for example the cost value 500 between node/subnet f and node/subnet a and the cost value 600 between the node/subnet f and the node/subnet b, so that the data transport from node/subnet f to one of the nodes/subnets a and/or b or to node/subnet b via node/subnet a for example is given primarily by the cost value 500 or 600 starting from node/subnet f to node/subnet a or b respectively, while the cost value between node/subnet a and b would have a minor impact on the total cost of the summarized cost values, so that the nodes/subnets a and b are seen as similar with respect to the cost value and are therefore aggregated to the new single node/subnet ab to achieve the simplified abstracted network topology. Furthermore, by comparing figs. 4a and 4b, it can be seen that the link between node/subnet f and the node/subnet a and the link between the node/subnet f and the node/subnet b (fig. 4a) are now lying parallel to each other as the nodes/subnets a and b have been aggregated to the new node/subnet ab (fig. 4b) so that there are two parallel links between the node/subnet f and the node/subnet ab (fig. 4b).

Furthermore, comparing the figs. 4b and 4c, it will be appreciated that the aforementioned parallel links are replaced by a single link between the node/subnet f and the node/subnet ab with the new cost value which is given as 500. This is the result of applying the rule to replace two or more parallel links 17 starting/ending at same nodes/subnets, e.g. the node/subnet f 7a (fig. 4b), and ending/starting in the new single node/subnet, e.g. the node/subnet ab 15, by a single link 17a with a new cost value, e.g. the cost value 14b (fig. 4c). The single link 17a which is determined to replace the two parallel links 17 may be determined as the link with the cost value equal to the minimum cost value of the replaced links. In the example depicted in figs. 4b and 4c, the parallel links 17 between the node/subnet f 7a and the node/subnet ab have been given by 500 and 600 respectively (fig. 4b). As the minimum of 500 and 600 is 500, the single link between node/subnet f 7a and the node/subnet ab 15 is determined as the link 17a with the new cost value 14b which is given by the value 500. The foregoing rule to replace parallel links by a single link is also named as cost transformation rule. Potential types of cost information comprise routing protocol metrics, delay or bandwidth. Each of them potentially requires an adapted cost transformation rule, so that beside the foregoing specific example alternative cost transformation rules may be applied having in common to replace two or more parallel links by a single link according to a given cost value.

A further search for a link with an associated cost value below the given threshold according to the similarity rule yields no further result and the abstracted network topology shows no more parallel links according to the cost transformation rule. Therefore, in this example, the abstraction of the network topology is finished and a simplified network map showing the links of the network and a simplified cost map showing the cost values of the links between the network elements, in particular nodes/subnets, is exported by the interface 4a to the ALTO server 8 - referring again to the illustrative scenario depicted in fig. 3 - and is afterwards exposed by the ALTO server 8 to the ALTO client 9 who thereby obtains a simplified abstracted, view of the communication network 1 containing the information useful for e.g. load balancing decisions of the network client.

## Claims

1. A method of providing network information of a communication network (1) comprising the steps of:
- gathering (2) network topology information of the communication network (1);
- abstracting (3) the network topology information, wherein the level-of-detail of the network topology information is reduced; and
- exporting (4) the abstracted network topology information.

2. The method according to claim 1, wherein the step of gathering (2) network topology information comprises the step of gathering the network topology information by means of a network management function, in particular by a network management system (5). by one or more network monitor components (6) or by communicating with network elements (7) of the communication network (1) directly, in particular by accessing routing tables.

3. The method according to claim 1, wherein the step of exporting (4) the abstracted network topology information comprises the steps of
- exporting the abstracted network topology information to one or more ALTO servers (8), or to one or more other topology exposure components, in particular to a web portal; and
- exposing the abstracted network topology information by means of an ALTO server (8) of the one or more ALTO servers (8) or an other topology exposure component of the one or more other topology exposure components to one or more clients of the ALTO server (8) or the one or more other topology exposure components respectively.

4. The method according to claim 1, wherein the step of abstracting (3) the network topology information comprises the steps of
- receiving (10) a full topology network information (11) comprising detailed information about original nodes/subnets (7) of the communication network (1); and
- applying a topology simplification (12) on the full topology network information (11), wherein at least a subset of the original nodes/subnets (7) of the communication network (1) are aggregated to one or more new nodes/subnets (15) resulting in a simplified abstracted topology (13) of the communication network (1).

5. The method according to claim 4, wherein the step of aggregating at least a subset of the original nodes/subnets (7) of the communication network (1) to one or more new nodes/subnets (15) of the communication network (1) comprises the step of mapping, one or more times, the addresses of two or more of the original nodes/subnets (7) to a Partition ID (16) related to one of the one or more new nodes/subnets (15) of the communication network (1), wherein a network map of the simplified network topology with nodes/subnets is provided, wherein the number of the nodes/subnets of the simplified network topology is reduced compared to the number of the original nodes/subnets (7).

6. The method according to claim 4, wherein the step of abstracting (3) the network topology information comprises the step of providing a cost map of the simplified topology of the communication network (1) comprising cost values (14, 14b) between each link of the simplified topology of the communication network (1).

7. The method according to claim 4, wherein the step of abstracting (3) the network topology information comprises the steps of
- receiving (10) the full network topology information from a network management function comprising the original detailed network topology information of the communication network (1); and
- applying a graph transformation algorithm on the original detailed network topology information, wherein the simplified abstracted topology (13) of the network is provided.

8. The method according to claim 7, wherein the step of applying the graph transformation algorithm comprises applying a rule to aggregate two or more nodes/subnets (7) to a new single node/subnet (15), if the cost values (14a) between said two or more nodes/subnets (7) fulfil a defined criteria, in particular if the costs values are below a given threshold.

9. The method according to claim 8, wherein the step of applying the graph transformation algorithm further comprises applying a rule to replace two or more parallel links (17) starting/ending at same nodes/subnets (7a) and ending/starting in the new single node/subnet (15) by a single new link (17a) with a new cost value (14b).

10. The method according to claim 9, wherein the algorithm calculates the new cost value based on cost information of two or more links, in particular the two or more parallel links, before applying the graph transformation, in particular for cost information that is based on routing protocol metrics, delay, or bandwidth.

11. The method according to claim 9, wherein the step of applying the rule to replace two or more parallel links (17) starting/ending at same nodes/subnets (7a) and ending/starting in the new single node/subnet (15) comprises the step of replacing the two or more parallel links (17) by a single link (17a) with a cost value (14b) equal to the minimum cost value of the parallel links (17), wherein the cost values of other links starting/ending in the new single node/subnet (15) remain the same.

12. The method according to claim 8 and 9, wherein the step of applying the graph transformation algorithms comprises the step of applying the rules iteratively, wherein the threshold may also be set to new, in particular higher, value in follow-up iterations, in particular in order to achieve an abstraction with a designated level-of-detail.

13. A network management component (5) adapted to
- gather (2) network topology information of a communication network (1);
- abstract (3) the network topology information, wherein the level-of-detail of the network topology information is reduced; and
- export (4) the abstracted network topology information.

14. A data processing component adapted to
- receive network topology information of a communication network (1) from a network management function;
- abstract (3) the network topology information, wherein the level-of-detail of the network topology information is reduced; and
- export (4) the abstracted network topology information.

15. A software product adapted to abstract (3) the network topology information of a communication network (1), wherein the level-of-detail of the network topology information is reduced, and export (4) the abstracted network topology information, when executed by a data processing unit.
